# EUROPEAN PATENT SPECIFICATION

(11) **EP 1 913 346 B1**
(45) Date of publication and mention of the grant of the patent: **29.09.2010**
(21) Application number: 06790447.4
(22) Date of filing: 26.07.2006
(51) Int. Cl.: G01H 3/00, G01K 3/14

(54) **DEVICE AND METHOD FOR DETERMINING SCALAR QUANTITIES OR VECTOR QUANTITIES**
EINRICHTUNG UND VERFAHREN ZUM BESTIMMEN VON SKALAREN GRÖSSEN ODER VEKTORGRÖSSEN
DISPOSITIF ET PROCÉDÉ DE DÉTERMINATION DE QUANTITÉS SCALAIRES OU DE QUANTITÉS VECTORIELLES

(30) Priority: 28.07.2005 BE 200500376
(43) Date of publication of application: 23.04.2008
(73) Proprietor: LMS International NV, 3001 Leuven (BE)
(72) Inventor: BOUWEN, Wim, Kris, B-2600 Antwerpen (BE); VANDENBRANDE, Sigurn, Joël, Noël, B-8720 Dentergem (BE)
(74) Representative: Bird, Ariane
(86) International application number: PCT/BE2006/000083
(87) International publication number: WO 2007/012146

(56) References cited:
- WO-A1-98/08112
- WO-A1-98/08112
- US-A- 4 575 829
- ANONYMOUS: "Hand-held Sound Intensity System (2260 Investigator and Intensity Software BZ7205 ? Type 2260E and Sound Intensity Probe Kit for 2260 ? Type 3595)" BRÜEL&KJ R PRODUCT DATA, [Online] 19 December 2003 (2003-12-19), XP002373615 Retrieved from the Internet: URL:http://web.archive.org/web/20031219074 908/http://bksv.com/pdf/bp1755.pdf> [retrieved on 2006-03-22]

## Description

The present invention concerns a device for determining scalar or vector quantities, more particularly in the space around a machine or in a building or suchlike.

Devices for spatial determination of scalar or vector quantities are already known, for instance in the form of devices for determining the sound field around a source of sound, which make use of a series of static measuring instruments set up at predefined positions for measuring the sound at a number of points in the space, which further have means for calculating and/or extrapolating the sound field around the sound source, on the basis of the measurement results.

Such devices make it possible e.g. to localise the source of undesired noise from a machine or suchlike. For this purpose, the calculated sound field is for instance superimposed in a computer animation on a 2D or 3D model of the machine concerned, which is inputted into the computer in order to localise the sound source visually.

An article entitled "Noise source location techniques - simple to advanced applications" in the March 2003 edition of the magazine "Sound and vibration" gives an overview of such known devices for locating a sound source.

Some devices have the disadvantage that the measuring instruments set up statically do not permit extrapolation by calculation to all points in the space around the sound source, so that measurements from different set-ups and positions are necessary to obtain a complete picture of the spatial values to be studied.

Another disadvantage is that a 2D or 3D digital model of the machine or object to be studied has to be defined in advance, for example by means of drawing programs or suchlike, which is laborious and time-consuming.

Some devices have the disadvantage that the measuring set-up is Stationary and not portable, so that it is not possible to alter the measuring set-up quickly and flexibly according to the circumstances of the moment or the needs of users.

Devices are also known in which a series of measuring elements is moved around the machine on a frame by means of a robot in order to carry out successive measurements and obtain a 2D or 3D representation of the values measured.

A disadvantage of such devices is that in this case also a digital model of the machine or object to be studied has to be defined, for instance in order to avoid the robot-driven device coming in contact with the machine to be measured.

A further disadvantage is the cost, complexity and manoeuvrability of such devices, together with the fact that a robot requires programming and does not make it possible to react quickly and flexibly to the situation of the moment.

US-A-4 575 829 discloses a portable sound-level measuring device. The position of the device with respect to two "reference stations" is determined for every sound-level reading taken.

The Product data sheet "Hand-held Sound Intensity System" (2260 Investigator and Intensity Software BZ7205-Type 2260E and Sound Intensity Probe Kit for 2260-Type 3595) discloses a hand-held system capable of tracking down noise sources. A compass display, showing the direction of incidence of the sound energy in relation to the probe, and a spectrum display are available for on-line source location.

The published patent application WO 98/08112 discloses a device for recording three-dimensional ultrasound images which comprises a freely movable ultrasound head. The device comprises further a position detection system including three electromagnetic wave-emitting transmitters, attached to the ultrasound head and two sensors, detecting electromagnetic waves in order to determine the position and orientation of the ultrasound head.

In other technical fields too, developments are being made in the area of devices for determining scalar or vector values in a space.

For example, devices are known that make it possible to determine the geometry of an object by scanning it with laser light, in order to create a 3D image on the basis of the measurement results. However, such devices do not permit parameters other than the geometrical data to be studied.

The present invention has as its object to offer solutions to these and other disadvantages.

According to a first embodiment of the invention, a device is provided for determining scalar or vector values in a space. The device comprises essentially a portable measuring apparatus that can be manipulated by hand, with at least one measuring element for measuring said scalar or vector values at successive points in space. The device comprises further means for recording the values measured and means for determining and recording data concerning the position and/or orientation of the measuring apparatus or measuring element at the moment of each measurement. The device comprises further means for connecting said recorded values and data, either in processed form or otherwise, or for synchronising them with each other and means for displaying the connected values and data, in order to create a spatial representation of said values.The means for determining the position and/or orientation of the measuring apparatus or measuring element are formed by an optical system and the device further comprises means for activating the measurements only at desired moments, which activating means consists of a time switch or an interval switch.

The device may have with a clock for synchronising the measured values and data, based on a determination of the time at which the above-mentioned measurements are carried out.

The device may be provided with a filter to filter out and visualise certain measured values.

The activating means may be such that the measurements are only activated whenever the measuring apparatus or measuring element has a set desired orientation or position.

The set position may be a geometrical surface or volume.

The device may be provided with means for determining the speed and/or acceleration of the measuring element and that the means for activating the measurements may be such that the measurements are only activated for speeds and/or accelerations below a preset value.

The device the measuring element may be a non-contact measuring element.

The means for displaying the connected values and data may be such that a real-time display is possible.

An advantage of such a device is that measurement results in a space can be gathered in a fairly quick and simple manner by moving the measuring element of the measuring apparatus arbitrarily in the space to be studied, for example in circular measurements around the object to be studied, while simultaneously recording the orientation and position of the measuring element so as to visualise the measurement results in their spatial context, in particular in 1, 2 or 3 dimensions for scalar fields, extended by orientation in space for vector fields.

By more or less following the contours of the object or space to be studied by moving the measuring element manually, it is possible to visualise a fairly accurate image of the object by means of a computer simulation, for example as the contour of the empty space in which no measurement result is obtained.

This makes it possible to immediately obtain a picture of the spatial correlation of the values measured with respect to the spatial image of the object, so that causal relationships can very quickly be visualised and for example an undesired source of noise in a machine or suchlike can be detected and located.

This spares the effort of first having to create a digital model of the object or space to be studied in order to visualise such causal relationships.

A device according to the invention can furthermore be used very flexibly, since the measuring apparatus is portable and can be moved arbitrarily in space, without the movements having to be controlled by a robot.

In this way it is possible for example when carrying out sound measurements to try to obtain a first rough picture of the sound field around the machine, by carrying out a few rough measurement movements with the measuring apparatus around the machine, and then on the basis of the results obtained carrying out a finer scanning of the sound field at place where a higher sound concentration is perceived, so as to be able to detect the location of the undesired sound source fairly quickly and accurately.

An associated advantage is that fewer measurements have to be carried out than with the known devices, since the measurements can be mainly concentrated at these points that are of importance to the study of the machine or suchlike.

Furthermore, the user himself determines the accuracy of the measurements, since he is able to control the movements of the measuring apparatus and is able to control the latter in real time or practically in real time if the device has sufficient computing power for this.

A non-contact measuring element is preferably used as the measuring element, so that contact with the object to be studied is superfluous and the measurement results are not influenced unfavourably as with other devices.

This invention is applicable in many technical fields, but is particularly useful in one or more of the following applications:
- measurement of sound;
- measurement of acoustic particle speeds;
- measurement of vibrations;
- measurement of displacement, speed and acceleration;
- measurement of flows in gases and/or liquids;
- measurement of temperature and humidity;
- measurement of electromagnetic signals or fields.

Other possible applications include measurement of light, gas concentrations, chemical compositions, colour, radioactivity, distance, coating thickness and suchlike.

According to another embodiment of the invention, a method is provided for determining scalar or vector values in a space. The method consists essentially of moving a portable measuring apparatus in the space to be studied and carrying out successive measurements of the values to be determined at successive measuring points in said space.; for each measurement, determining the data that relate to the position and/or orientation of the measuring apparatus (2) at the moment of the measurement by an optical system; and connecting the values and data obtained, or synchronising them with each other, and displaying the connected values and data so as to create a spatial representation of said values; and *activating the measurements only at desired moments by a time switch or an interval switch.*

To better demonstrate the characteristics of the invention, a preferred embodiment of a device for determining scalar or vector values is described below, without being limitative in any way, with reference to the attached drawings, in which the only figure is a schematic diagram of the device according to the invention.

The device 1 shown essentially comprises a portable measuring apparatus 2 that can be manipulated by hand, which in this case is provided with a measuring element 3, for example for measuring sound intensity as a vector value in the space around a machine 4, such as a compressor or other sound source.

The device is further provided with means 5 in the form of a data acquisition system for gathering and recording the measured values on an information medium, for example a hard disk or suchlike.

The device is further provided with means 6 for determining and recording data concerning the position and/or orientation of the measuring apparatus 2 or the measuring element 3 at the moment of each measurement.

Said means 6 consist in the example shown of an optical measuring system with two cameras having an overlapping field of view of the machine 4 and of the space around the machine 4, so as to be able to follow the movements and record three reference points 8, for example in the form of LEDs mounted on the measuring apparatus 2.

The cameras 7 are connected to a computing unit 9 programmed to determine, in a known way, the position and/or orientation of the measuring apparatus 2 and/or the measuring element 3.

Other known techniques and instruments can of course also be used to determine the position and/or orientation of the measuring apparatus 2 or measuring element 3, such as a GPS (global positioning system), gyroscopes, accelerometers or suchlike.

According to the invention, the device 1 includes means 10 to connect or synchronise the above-mentioned recorded values and data concerning the position and orientation of the measuring apparatus 2 or measuring element 3, together with means 11 for representing the said connected or synchronised values and data, in processed form or otherwise, so as to create a spatial representation of these values.

These means 11 for visualising the measured or processed values can for example consist of a computer with an appropriate program which visualises the values measured on a screen, according to the spatial position of the measuring element at the moment of the measurement.

This visualisation can be 1, 2 or 3 dimensional for scalar fields, along with the orientation for vector fields.

Depending on the type of investigation, preference may be given to a 3D representation that enables the user as it were to move through the field of scalar or vector values and to zoom in on interesting parts of the measurement field.

Other forms of visualisation, such as tables, fields, volumes, vector fields, contour representations and suchlike are not excluded.

If there is sufficient computing power, the visualisation can be generated in situ during the measurements, as it were in real time, or in other words simultaneously with the measurements being carried out.

The way in which the means 10 connect the measured values on the one hand and the measurement data concerning the position and/or orientation is not important, but can be done by e.g. processing these data in a single database or by synchronising the separate data from two databases, either manually or automatically, on the basis of time, position and suchlike.

For synchronisation on the basis of time, the device 1 must of course be provided with a clock for determining the time of the measurements and determinations of position that are carried out.

The device 1 according to the invention can be applied according to the following method.

For measuring the sound of the machine 4, the measuring apparatus 2 is moved with its measuring element 3 in an arbitrary manner in the space around the machine 4, for example in a movement 14 which approaches and follows the contour of the machine 4 and then in one or more wider movements 15 around the machine 4.

At the same time measurements are carried out with a measuring element 3 and the position and orientation of the measuring apparatus 2 are recorded.

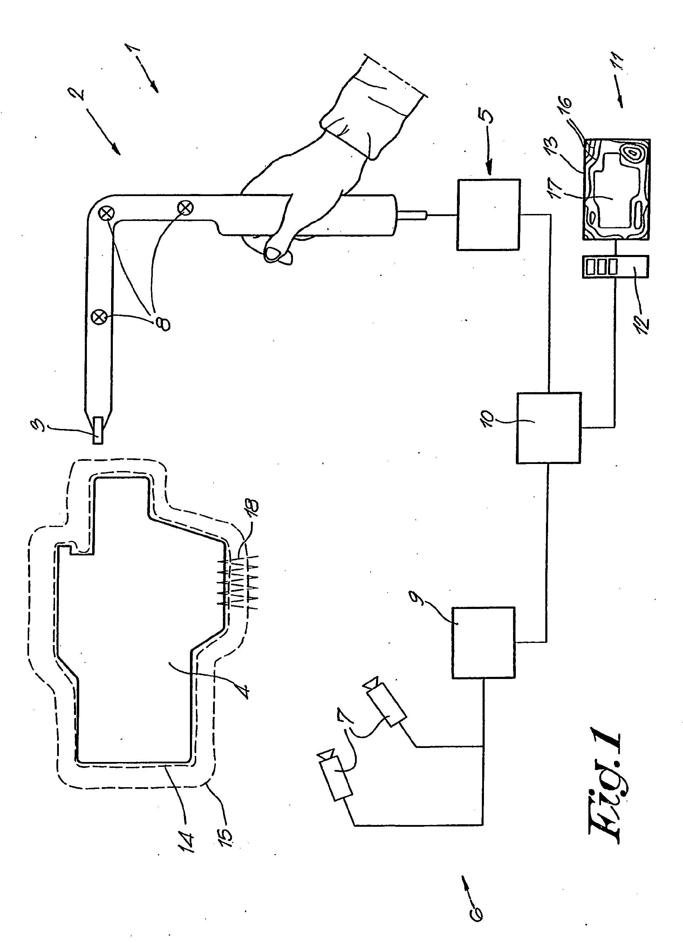

Subsequently, the data are synchronised and the values measured with the measuring element 3 are displayed spatially on the screen 13, for example in the form of isolines 16 along which the measured sound parameter is constant, as shown in fig. 1.

Such a visualisation shows in a certain sense both the form of the machine 4 and the contour of the zone 17 in which the measurement results are lacking.

The image on the screen 13 makes it possible to visualise the zones in which the sound is most concentrated, and also makes it possible e.g. to localise those parts of the machine 4 that are a source of sound.

For a more accurate diagnosis of the sound source it is possible for example to zoom in on the zones in the image where the sound is most concentrated, or the accuracy of the image in these zones can be improved by carrying out additional, spatially more concentrated measurements in the corresponding space around the machine 4, for example by making short, closely spaced to-and-fro movements 18 with the measuring apparatus 2.

In this way it is possible to systematically build up the image of the measurements, continually taking new, additional measurements into account.

The device 1 may if desired be provided with a program that permits the contour of the machine to be digitised on the basis of localisation measurements of the measuring element 3 whenever the latter is led along the contour of the machine.

For this purpose, the measuring apparatus could for example be equipped with a control button which is pressed whenever the measuring element 3 is in contact with the machine 4.

It is clear that the measured values can if desired be processed before they are visualised on the screen 13. For example, a mathematical algorithm can be used to filter out and display only those measurements that meet certain conditions, such as measurements in a certain geometrical surface or volume, for example measurements in a plane, or measurements corresponding to a certain orientation of the measuring element 3 or suchlike.

Direct filtering of the measurement data themselves is also among the possibilities, for example to look only at certain frequency bands or suchlike.

In order to limit the quantity of data, the measurements can be carried out discontinuously in time and space. For this purpose means may be provided to activate the measurements only at desired moments.

Such means can consist of e.g. a manually operated switch, time switch or interval switch mounted on the measuring apparatus 2.

Another possibility may consist of a built-in trigger to activate the measurements only for certain absolute or relative positions or orientations of the measuring element 3, for example for measurement positions is a certain plane, or wherever a position is leached that is located at a certain distance from previous measurement points, or for speeds or accelerations of the measuring apparatus 2 under a preset maximum permitted value or suchlike.

It is clear that instead of being equipped with only one measuring element 3, the measuring apparatus 2 can also be equipped with several measuring elements 3, of the same or different types.

Although the figure shows a device in which the parts 2, 5, 6, 10 and 11 are connected to each other by electrical wire connections, it is not excluded for one or more of these connections to be wireless.

It is clear that some or all of the parts can be integrated in a single unit, or can for example form part of the measuring apparatus 2.

Advantages of the invention with regard to sound measurements include the following:
- makes it easy to control the quality of the measurements in terms of sound intensity, since the distance from the object can be checked, and the orientation of the measuring element 3 can immediately be seen, as can whether the measuring element 3 is in near field or far field conditions,
- permits measurements in a plane, for example for measuring the sound pressure;
- permits measurement of the 3D sound field (sound intensity or pressure) around an object with a very irregular and complex, not flat shape;
- does not require prior knowledge of the location of the sound source;
- makes it possible to determine the sound power of objects in a larger machine.

Another important application of the invention lies in the field of measuring particle speeds, in which the measuring element 3 is a sensor, for example of the known type "Microflow 3-dimensional acoustic particle velocity probe."

In this case the device 1 according to the invention has the following advantages:
- makes it possible to visualise the sound field measured around an object with a very irregular and complex, not flat shape;
- depending on the frequency of the sound and the related vibrations ("structure-born noise"), makes it possible to display a so-called "vibration surface map of a radiating body" and to carry out a so-called "operational deflection shape analysis";
- also makes it possible to carry out a modal analysis, if a measuring element 3 with sufficient sensitivity is used, which in turn can help to acquire understanding of the complex, changing sound fields around objects, both in the far field and in the near field.

The present invention is in no way limited to the embodiment shown in the drawings, which is given by way of example only; on the contrary, such a device and method according to the invention as defined in the claims can be implemented in all sorts of variants, while remaining within the scope of the invention.

## Claims

1. Device for determining scalar or vector values in a space, said device (1) essentially comprising a portable measuring apparatus (2) that can be manipulated by hand, with at least one measuring element (3) for measuring said scalar or vector values at successive points in space; means (5) for recording the values measured; means (6) for determining and recording data concerning the position and/or orientation of the measuring apparatus (2) or measuring element (3) at the moment of each measurement; means (10) for connecting said recorded values and data, either in processed form or otherwise, or for synchronising them with each other; and means (11) for displaying the connected values and data, in order to create a spatial representation of said values
**characterized in that**
the means (6) for determining the position and/or orientation of the measuring apparatus (2) or measuring element (3) are formed by an optical system and that the device further comprises means for activating the measurements only at desired moments, which activating means consists of a time switch or an interval switch.

2. Device according to claim 1, **characterised in that** it is provided with a clock for synchronising the measured values and data, based on a determination of the time at which the above-mentioned measurements are carried out.

3. Device according to claim 1 or 2, **characterised in that** it is provided with a filter to filter out and visualise certain measured values.

4. Device according to claim 1, **characterised in that** the above-mentioned activating means are such that the measurements are only activated whenever the measuring apparatus or measuring element has a set desired orientation or position.

5. Device according to claim 4, **characterised in that** the set position is a geometrical surface or volume.

6. Device according to claim 5, **characterised in that** it is provided with means for determining the speed and/or acceleration of the measuring element (3), and that the above- mentioned means for activating the measurements are such that the measurements are only activated for speeds and/or accelerations below a preset value.

7. Device according to one of the above claims, **characterised in that** the measuring element (3) is a non-contact measuring element.

8. Device according to one of the above claims, **characterised in that** the means (11) for displaying the connected values and data are such that a real-time display is possible.

9. Device according to one of the above claims, **characterised in that** it is used in one or more of the following applications:
- measurement of sound; measurement of acoustic particle speeds; measurement of vibrations; measurement of displacement, speed or acceleration; measurement of flows in gases and/or liquids; measurement of temperature and humidity; measurement of electromagnetic fields.

10. Method for determining scalar or vector values in a space, consisting essentially of moving a portable measuring apparatus (2) in the space to be studied and carrying out successive measurements of the values to be determined at successive measuring points in said space; for each measurement, determining the data that relate to the position and/or orientation of the measuring apparatus (2) at the moment of the measurement by an optical system; and connecting the values and data obtained, or synchronising them with each other, and displaying the connected values and data so as to create a spatial representation of said values
**characterized by**
activating the measurements only at desired moments by a time switch or an interval switch.

11. Method according to claim 10, **characterised in that** the movement of the measuring apparatus (2) is done without the intervention of a robot.

12. Method according to claim 10, **characterised in** the movement of the measuring apparatus (2) is done according to an arbitrary motion.

13. Method according to anyone of the claims 10 to 12, **characterised in that** the spatial representation is carried out in real time or practically in real time.

## Patentansprüche

1. Vorrichtung zum Bestimmen skalarer oder Vektorwerte in einem Raum, wobei die Vorrichtung (1) im Wesentlichen einen tragbaren Messapparat (2) umfasst, der von Hand manipuliert werden kann, mit mindestens einem Messelement (3) zum Messen der skalaren oder Vektorwerte an aufeinander folgenden Punkten im Raum; ein Mittel (5) zum Aufzeichnen der Messwerte; ein Mittel (6) zum Bestimmen und Aufzeichnen von Daten bezüglich der Position und/oder Ausrichtung des Messapparates (2) oder Messelements (3) zum Zeitpunkt jeder Messung; ein Mittel (10) zum Verbinden der Messwerte und Daten, entweder in verarbeiteter oder anderer Form, oder zum Synchronisieren derselben miteinander; und ein Mittel (11) zum Anzeigen der verbundenen Werte und Daten, um eine räumliche Darstellung der Werte zu erstellen
**dadurch gekennzeichnet, dass**
das Mittel (6) zum Bestimmen der Position und/oder Ausrichtung des Messapparates (2) oder Messelements (3) durch ein optisches System gebildet ist und dass die Vorrichtung des Weiteren ein Mittel zum Aktivieren der Messungen nur zu gewünschten Zeitpunkten umfasst, wobei das Aktivierungsmittel aus einem Zeitschalter oder einem Intervallschalter besteht.

2. Vorrichtung nach Anspruch 1, **dadurch gekennzeichnet, dass** sie mit einer Uhr zum Synchronisieren der Messwerte und Daten auf der Basis einer Bestimmung der Zeit, zu der die oben genannten Messungen ausgeführt werden, bereitgestellt ist.

3. Vorrichtung nach Anspruch 1 oder Anspruch 2, **dadurch gekennzeichnet, dass** sie mit einem Filter zum Heraus filtern oder Visualisieren gewisser Messwerte bereitgestellt ist.

4. Vorrichtung nach Anspruch 1, **dadurch gekennzeichnet, dass** das oben genannte Aktivierungsmittel derart ist, dass die Messungen nur aktiviert werden, sobald der Messapparat oder das Messelement eine eingestellte, gewünschte Ausrichtung oder Position hat.

5. Vorrichtung nach Anspruch 4, **dadurch gekennzeichnet, dass** die eingestellte Position eine geometrische Oberfläche oder ein Volumen ist.

6. Vorrichtung nach Anspruch 5, **dadurch gekennzeichnet, dass** sie mit einem Mittel zum Bestimmen der Geschwindigkeit und/oder Beschleunigung des Messelements (3) bereitgestellt ist und dass das oben genannte Mittel zum Aktivieren der Messungen derart ist, dass die Messungen nur für Geschwindigkeiten und/oder Beschleunigungen unterhalb einem voreingestellten Wert aktiviert werden.

7. Vorrichtung nach einem der vorangehenden Ansprüche, **dadurch gekennzeichnet, dass** das Messelement (3) ein kontaktloses Messelement ist.

8. Vorrichtung nach einem der vorangehenden Ansprüche, **dadurch gekennzeichnet, dass** das Mittel (11) zum Anzeigen der verbundenen Werte und Daten derart ist, dass eine Echtzeitanzeige möglich ist.

9. Vorrichtung nach einem der vorangehenden Ansprüche, **dadurch gekennzeichnet, dass** sie in einer oder mehreren der folgenden Anwendungen verwendet wird:
- Schallmessung; Messung der Geschwindigkeit akustischer Teilchen; Messung von Vibrationen; Messung von Verschiebung, Geschwindigkeit oder Beschleunigung; Messung von Strömen in Gasen und/oder Flüssigkeiten; Messung von Temperatur und Feuchtigkeit; Messung von elektromagnetischen Feldern.

10. Verfahren zum Bestimmen skalarer oder Vektorwerte in einem Raum, im Wesentlichen bestehend aus dem Bewegen eines tragbaren Messapparates (2) in dem zu untersuchenden Raum und Durchführen aufeinander folgender Messungen der zu bestimmenden Werte an aufeinander folgenden Messpunkten in dem Raum; für jede Messung Bestimmen der Daten bezüglich der Position und/oder Ausrichtung des Messapparates (2) zum Zeitpunkt der Messung durch ein optisches System; und Verbinden der erhaltenen Messwerte und Daten, oder Synchronisieren derselben miteinander; und Anzeigen der verbundenen Werte und Daten, um eine räumliche Darstellung der Werte zu erstellen
**gekennzeichnet durch**
Aktivieren der Messungen nur zu gewünschten Zeitpunkten **durch** einen Zeitschalter oder einen Intervallschalter.

11. Verfahren nach Anspruch 10, **dadurch gekennzeichnet, dass** die Bewegung des Messapparats (2) ohne Intervention eines Roboters erfolgt.

12. Verfahren nach Anspruch 10, **dadurch gekennzeichnet, dass** die Bewegung des Messapparats (2) entsprechend einer willkürlichen Bewegung erfolgt.

13. Verfahren nach einem der Ansprüche 10 bis 12, **dadurch gekennzeichnet, dass** die räumliche Darstellung ein Echtzeit oder praktisch in Echtzeit ausgeführt wird.

## Revendications

1. Dispositif pour déterminer des valeurs scalaires ou vectorielles dans un espace, ledit dispositif (1) comprenant principalement un appareil de mesure portatif (2) qui peut être manipulé à la main, avec au moins un élément de mesure (3) pour mesurer lesdites valeurs scalaires ou vectorielles en des points successifs dans l'espace ; un moyen (5) pour enregistrer les valeurs mesurées ; un moyen (6) pour déterminer et enregistrer des données concernant la position et/ou l'orientation de l'appareil de mesure (2) ou de l'élément de mesure (3) au moment de chaque mesure ; un moyen (10) pour relier lesdites valeurs enregistrées et lesdites données, soit sous forme traitée ou autrement, ou pour les synchroniser les unes avec les autres ; et un moyen (11) pour afficher les valeurs et les données reliées, afin de créer une représentation spatiale desdites valeurs
**caractérisé en ce que**
le moyen (6) pour déterminer la position et/ou l'orientation de l'appareil de mesure (2) ou de l'élément de mesure (3) est formé par un système optique et **en ce que** le dispositif comprend en outre un moyen pour activer les mesures seulement à des moments souhaités, lequel moyen d'activation consiste en un commutateur minuté ou un commutateur à intervalle.

2. Dispositif selon la revendication 1, **caractérisé en ce qu'**il est muni d'une horloge pour synchroniser les valeurs mesurées et les données, en se basant sur une détermination du moment auquel les mesures précédemment mentionnées sont effectuées.

3. Dispositif selon la revendication 1 ou 2, **caractérisé en ce qu'**il est muni d'un filtre pour filtrer et visualiser certaines valeurs mesurées.

4. Dispositif selon la revendication 1, **caractérisé en ce que** le moyen d'activation précédemment mentionné est tel que les mesures sont seulement activées chaque fois que l'appareil de mesure ou l'élément de mesure a une orientation ou une position fixée souhaitée.

5. Dispositif selon la revendication 4, **caractérisé en ce que** la position fixée est une surface ou un volume géométrique.

6. Dispositif selon la revendication 5, **caractérisé en ce qu'**il est muni d'un moyen pour déterminer la vitesse et/ou l'accélération de l'élément de mesure (3), et **en ce que** le moyen précédemment mentionné pour activer les mesures est tel que les mesures sont seulement activées pour des vitesses et/ou des accélérations au-dessous d'une valeur définie à l'avance.

7. Dispositif selon l'une des revendications précédentes, **caractérisé en ce que** l'élément de mesure (3) est un élément de mesure sans contact.

8. Dispositif selon l'une des revendications précédentes, **caractérisé en ce que** le moyen (11) pour afficher les valeurs et les données reliées est tel qu'un affichage en temps réel est possible.

9. Dispositif selon l'une des revendications précédentes, **caractérisé en ce qu'**il est utilisé dans une ou plusieurs des applications suivantes :
- mesure de son ; mesure de vitesses de particule acoustique ; mesure de vibrations ; mesure de déplacement, de vitesse ou d'accélération ; mesure de débits dans des gaz et/ou des liquides ; mesure de température et d'humidité ; mesure de champs électromagnétiques.

10. Procédé pour déterminer des valeurs scalaires ou vectorielles dans un espace, consistant principalement à déplacer un appareil de mesure portatif (2) dans l'espace à étudier et à effectuer des mesures successives des valeurs à déterminer en des points de mesure successifs dans ledit espace ; pour chaque mesure, à déterminer les données qui se rapportent à la position et/ou à l'orientation de l'appareil de mesure (2) au moment de la mesure par un système optique ; et à relier les valeurs et les données obtenues, ou à les synchroniser les unes avec les autres, et à afficher les valeurs et les données reliées de façon à créer une représentation spatiale desdites valeurs
**caractérisé par**
l'activation des mesures seulement à des moments souhaités par un commutateur minuté ou un commutateur à intervalle.

11. Procédé selon la revendication 10, **caractérisé en ce que** le mouvement de l'appareil de mesure (2) est effectué sans l'intervention d'un robot.

12. Procédé selon la revendication 10, **caractérisé en ce que** le mouvement de l'appareil de mesure (2) est effectué selon un mouvement arbitraire.

13. Procédé selon l'une quelconque des revendications 10 à 12, **caractérisé en ce que** la représentation spatiale est effectuée en temps réel ou pratiquement en temps réel.
